# EUROPEAN PATENT APPLICATION

(11) **EP 3 882 830 A1**
(43) Date of publication of application: **22.09.2021**
(21) Application number: 19842369.1
(22) Date of filing: 14.11.2019
(51) Int. Cl.: G06Q 10/06, G06Q 50/12, G06K 9/78

(54) **SYSTEM AND METHOD FOR THE QUALITY CONTROL OF COOKED DISHES**

(30) Priority: 14.11.2018 ES 201831101
(71) Applicant: Beabloo, S.L., 08019 Barcelona (ES)
(72) Inventor: PORTELL GUARCH, Jaume, 08019 Barcelona (ES)
(74) Representative: Herrero & Asociados, S.L.
(86) International application number: PCT/ES2019/070780
(87) International publication number: WO 2020/099710

(57) **Abstract**

The system comprises detection means (1, 2, 3) to detect the ingredients of said prepared dish, its presentation, its temperature and its weight, said detection means (1, 2, 3) being connected to a screen (6) which displays the detected values of the ingredients, the presentation, the temperature and the weight.

The method comprises determining quality parameters of a prepared dish (10); detecting if the prepared dish (10) meets the determined quality parameters; if it is determined that the prepared dish (10) does not meet the determined quality parameters, emit a notification indicating what quality parameter(s) is/are not met; if it is determined that the prepared dish (10) meets the determined quality parameters, emit a notification indicating that all the quality parameters are met.

## Description

The present invention relates to a prepared dish quality control system and method which allows a visual, temperature and weight check of the dish to be automatically performed before serving it in order to contrast it with the quality parameters established by the head chef.

### Background of the invention

Normally, in fine dining restaurants, the preparation of dishes entails a multi-dimensional process which takes into account much more than the foods involved and their cooking process. It also includes questions such as presentation, the context in which it should be served, the time that should pass between cooking and serving, etc.

In addition, once the dishes have been designed by the chef and the team trained in the process, it is normal for the chef to not always participate directly in the preparation and therefore they cannot check the quality of the execution in person, sometimes giving rise to errors which damage the reputation of the restaurant.

In addition, it is possible nowadays to print visual codes (barcodes, QR codes, etc.) such that using visual recognition it is possible to identify what product or object we have before us. It is normally used in commercial environments to recognize products and their packaging.

The production of crockery is carried out with different materials which require a different treatment for its preservation and washing.

Normally, in domestic and professional environments, such as hotels, bars or restaurants, the washing is carried out using automatic machines (dishwashers) and the selection of the washing programs is carried manually.

When selecting the program, determining the type of crockery is key so that the selected program controls the temperature or the type of action of the water and detergents according to the care required for each material and also so that it guarantees the complete hygiene of the crockery to eliminate any remainder of food which could affect the health of people or the taste of the foods subsequently served on said crockery.

However, the manual process of program selection is sometimes incorrect, due to the lack of knowledge of the abilities of the dishwasher, the material type, lack of attention by the operator of the equipment such that the food type served on the crockery or the combination of the foregoing is ignored.

In addition, in the food preparation process in a restaurant, it is common that once the food has been presented on the crockery, the dish is kept in the kitchen prior to service on the table for a certain time so that it arrives to the table in the best conditions required for maintaining it at a determined temperature according to the food type.

For example, salads are stored in a refrigerated space and hot plates in some type of plate heater. The selection process of the conditions suitable for storing the dish prior to service is nowadays manual and requires human intervention.

It is in turn common nowadays that when crockery has been used to serve dishes with certain foods, for example egg, even after washing, if the process has not been appropriate, the crockery exhibits smells of this food or even physical residues which affect the full enjoyment of a further use of the same.

Consequently, a first objective of the invention is to automatically perform a visual, temperature and weight check of the dish prior to serving it in order to contrast it with the quality parameters established by the head chef and provide an evaluation to the individual in charge of the kitchen before taking the dish to the table.

### Description of the invention

Using the quality control system and method of the invention, the cited drawbacks can be resolved, presenting other advantages which will be described below.

The prepared dish quality control system according to the present invention comprising detection means to detect the ingredients of said prepared dish, its temperature, its presentation and its weight, said detection means being connected to a screen which displays the detected values of the ingredients, the temperature, an evaluation of the presentation, as a function of the arrangement of the components of the dish and the weight.

According to a preferred embodiment, said detection means comprise a camera situated in a kitchen where said dish is prepared, a heat sensor and a scale where the prepared dish is placed.

In addition, said detection means can also comprise a second camera situated on a table where said dish is served.

The prepared dish quality control system according to the present invention can also comprise a projector that projects an image on the table where said dish is served.

Preferably, the prepared dish quality control system according to the present invention also comprises a code on the crockery used for the prepared dish.

According to a second aspect, the invention relates to a prepared dish quality control method comprising the following steps
- determining quality parameters of a prepared dish;
- detecting if the prepared dish meets the determined quality parameters;
- if it is determined that the prepared dish does not meet the determined quality parameters, emit a notification indicating what quality parameter(s) is/are not met;
- if it is determined that the prepared dish meets the determined quality parameters, emit a notification indicating that all the quality parameters are met.

Advantageously, said quality parameters are the ingredients, the temperature, the presentation and the weight and said notification is an indication on a screen.

The quality of the presentation is preferably determined as a function of the arrangement of the components of the dish, comparing it with a predetermined arrangement.

Using the prepared dish quality control system and method, at least the following advantages are achieved:
It allows a visual, temperature and weight check of the dish to be performed automatically prior to serving it in order to contrast it with the quality parameters established by the head chef and provide an automatic evaluation to the individual in charge of the kitchen before taking the dish to the table.

It allows an augmented reality experience to be offered in the service of the dishes to the table such that the diners can listen to music or sounds related to the dish served, at the time at which it is served to them and see additional information projected onto the tablecloth.

It allows the client of the restaurant to offer feedback on the dish served from the table itself.

In addition, it also allows any element of crockery (plates, cups, glasses, etc.) to inform the dishwasher of its care characteristics by means of a clear identification present on the visual pattern of the crockery.

It allows the food type for which the crockery in question has been used to be matched in order to thereby be able to have complete traceability of the use of the crockery.

It can also be ensured that the elements of the crockery clearly identified will be treated in accordance with the content which they accommodate or have accommodated such that they are suitably cared for prior to their service (when they still accommodate the food) when they are served on the table or subsequent to their use when they enter the hygienization process, be it manual or automatic.

### Brief description of the figures

To better understand what has been outlined, drawings are included in which, schematically and only by way of non-limiting example, a practical embodiment is represented.
Figure 1 is an elevated schematic view of a kitchen which includes the quality control system according to the present invention; and
Figure 2 is an elevated schematic view of a table where a prepared dish is served which includes the quality control system according to the present invention; and
Figure 3 is a plan view of an image which is projected on the table where a prepared dish is served.

### Description of a preferred embodiment

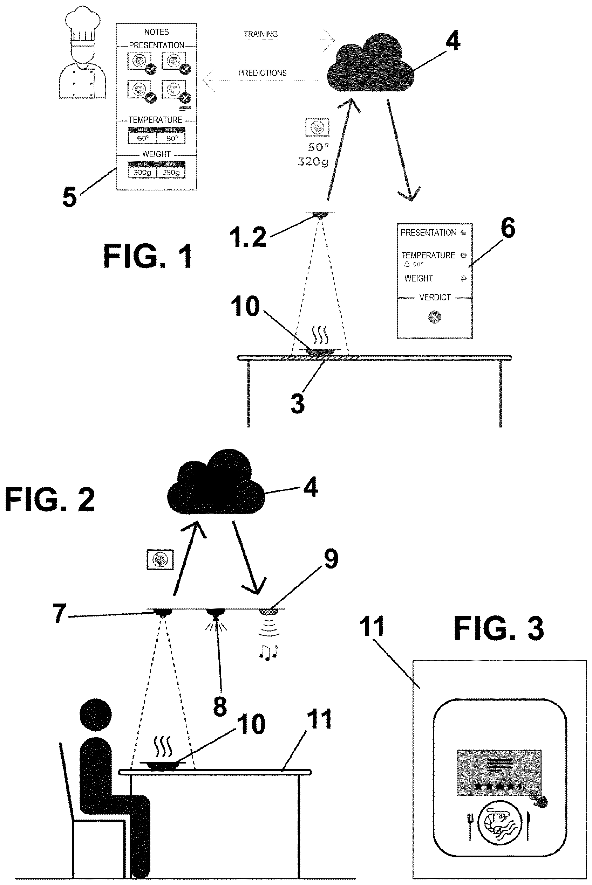

A kitchen is schematically shown in Figure 1 which includes the control system according to the present invention comprising control means formed by a camera 1, a heat sensor 2 and a scale 3 which according to the embodiment represented are integrated in a single device.

Said camera 1 determines the ingredients which are in the prepared dish and captures and evaluates the correct presentation of the dish, the heat sensor 2 determines the temperature at which the prepared dish is found and the scale 3 determines the weight of prepared dish 10. If desired, the kitchen preferably also comprises a luminaire which directly illuminates the prepared dish.

Once these values are determined, they are sent to control means 4, for example, a computer connected to a network, for example the internet. In said control means 4, it is determined if these values are within predetermined quality parameters (which can be shown on a monitor 5) and a notification is displayed on a screen 6 whether or not the detected values are within the quality parameters.

A table 11 is schematically shown in Figure 2 where the prepared dish is served which includes the control system according to the present invention comprising a second camera 7 which is placed over the prepared dish 10 and a projector 8 which projects an image on the table 11, as can be seen in Figure 3. In addition, a speaker 9 can also be included to emit suitable music or sounds.

Some examples of use of the quality control system and method according to the present invention are described below.

### - Assigning the food

On the examination or plating table of the kitchen, owing to the overhead camera 1, the type of crockery used for carrying out the service is detected, owing to a touchscreen by means of manual intervention, or by optical recognition or another type, the food type contained and the dish type are detected. This identification is stored in a database of the control means 4. Once this assignment has been carried out, the system recognizes against what models it is supposed to compare for the quality control.

### - Weight check of the food

With the identification of the crockery on the examination table, the system gains knowledge of the crockery type and therefore of the empty weight. Using this, it is able to measure with precision the weight of the food which is served: meat, sauce, etc. and compare it with the range of predetermined weights for said dish, thereby determining if it is within the quality standards.

### - Quality control with artificial intelligence

On the same examination table, the system takes two photographs of the dish 10 by means of the illumination suitably provided by the integrated light. One of the photos serves to contrast the presentation with a visual recognition database containing hundreds or thousands of photos or previous preparations of the dish. The system by means of artificial intelligence predicts whether or not the dish is within the standards.

In turn, by means of the temperature sensor 2, it is established if the temperature of the dish 10 is within the suitable parameters. Once the weight, the temperature and the appearance are measured, the system emits in real time a (visual or audio) satisfaction indicator and a diagnostic of the problem if it does not meet the standards.

### - Feeding the specialist system

The chef, in real time or in a subsequent observation via the database of photos and measurements, feeds back to the system new quality assessments. Being able to correct a dish which the system detected as correct by marking it as wrong and potentially indicating a reason, or, conversely, identifying a case where the system detected an error and marking it as correct such that the temperature, weight and visual appearance ranges are introduced in the database of the specialist system to help improve future predictions.

### - Plate heating table or refrigeration area

Once plated, the crockery may be placed on a conveyor belt (not shown in the figures) with detection by cameras which conveniently takes the dish to the refrigeration area or plate heater in accordance with the food it contains.

### - Assignment of contents in augmented reality

The systems allows each dish type (not crockery type) to be assigned multimedia contents which accompany the service of the dish on the table. For example, a plate of prawns could be accompanied with a visual and text description of the origin of the food, food information (organoleptic characteristics, etc.), a characteristic sound which allows better understanding of the origin of the dish (the noise of the ships arriving at midday, the voices in an auction, etc.) and all kind of additional information which may be relevant, including the creation and inspiration process: works of art that have inspired the chef, celebrities that have positively rated the dish, comments on social media, etc.

This assignment process is carried out in the control program developed via the database of the system and can, in part, be carried out from the table of the clients with opinion gathering mechanisms.

### - Quality control of the service to table

Once the dish 10 is served on the table 11 of the diners, the system notes the delivery time, measuring if the service time has been adequate or may have excessively altered the temperature or consistency characteristics.

### - Activation of the augmented reality

Once the dish 10 is served on the table 11 of the diners, the system activates the augmented reality elements assigned for the tasting of the dish. This can activate the directional speakers 9 above the table to play music or the sounds that the chef has designed to accompany the tasting, for example playing noises of the arrival of the ships, the fish auction and lastly suitable music for the experience.

In turn, the projection of multimedia content on the table using the projector 8 of the table may also be activated, simply being able to display the name of the dish or additional information.

### - Interactive augmented reality

The system, owing to the cameras 1, 7 and projector 8, is able to emit images in the form of evaluation buttons or bars and detect the movements of the client's hands on them to interpret the desire to know more about some aspect or gather the evaluation on the dish served.

### - Photos of the experience

In addition, one of the addition options is to use the overhead camera 7 (2D, 360 or 3D) to capture a photo of the diners who would indicate by virtually pressing using the hands the desire to take this photo. The system could display the photo projected on the table.

### - Connection with a social network

The system would allow QR codes of existing social networks to be captured on the cellphones of the clients. By means of simple instructions projected on the table, such as the process of displaying the photo, it would give the opportunity to the diners to put their cellphone facing the QR code of their social network and immediately it would add the social network of the restaurant for them and allow them to receive in real time the photos on their preferred social network so that they can share the event.

Evidently, the system would allow the clients to share their opinion about the event on the public social network of the restaurant, thereby generating a value for the business and exposure at the time with greater impact of the experience.

In addition, in the quality control system according to the present invention, the crockery used may include a code, either printed or in another manner, for example a QR code or an RFID.

In this case, a hygienization cycle control could be provided. Owing to the traceability that the system entails by means of this code, for each piece that is introduced into a dishwasher, the food that has been served is known and therefore the washing temperature and process required to correctly hygienize it.

Using an antenna in the dishwasher connected to the system, the washing can be suitably activated for each case automatically.

In spite of the fact that reference has been made to a specific embodiment of the invention, it is evident for a person skilled in the art that the quality control system and method described may be subject to numerous variations and modifications and that all the details mentioned can be replaced with others that are technically equivalent without departing from the scope of protection defined by the attached claims.

## Claims

1. A prepared dish quality control system **characterized in that** it comprises detection means (1, 2, 3) to detect the ingredients of said prepared dish, its presentation, its temperature and its weight, said detection means (1, 2, 3) being connected to a screen (6) that displays the values detected of the ingredients, the presentation, the temperature and the weight.

2. The prepared dish quality control system according to claim 1, wherein said detection means comprise a camera (1) situated in a kitchen where said dish is prepared, a heat sensor (2) and a scale (3) where the prepared dish (10) is placed.

3. The prepared dish quality control system according to claim 1 or 2, wherein said detection means comprise a second camera (7) situated over a table (11) where said dish (10) is served.

4. The prepared dish quality control system according to claim 3, which also comprises a projector (8) that projects an image on the table (11) where said dish (10) is served.

5. The prepared dish quality control system according to claim 1, which also comprises a code on crockery used for the prepared dish (10).

6. A prepared dish quality control method, **characterized in that** it comprises the following steps:
- determining quality parameters of a prepared dish (10);
- detecting if the prepared dish (10) meets the determined quality parameters;
- if it is determined that the prepared dish (10) does not meet the determined quality parameters, emit a notification indicating what quality parameter(s) is/are not met;
- if it is determined that the prepared dish (10) meets the determined quality parameters, emit a notification indicating that all the quality parameters are met.

7. The prepared dish quality control method according to claim 6, wherein said quality parameters are the ingredients, the presentation, the temperature and the weight.

8. The prepared dish quality control method according to claim 6, wherein said notification is an indication on a screen (6).

9. The prepared dish quality control method according to claim 6, wherein the quality of the presentation is determined as a function of the arrangement of the components of the dish, comparing it with a predetermined arrangement.
